# EUROPÄISCHE PATENTSCHRIFT

(11) **EP 0 482 092 B1**
(45) Veröffentlichungstag und Bekanntmachung des Hinweises auf die Patenterteilung: **17.05.1995**
(21) Anmeldenummer: 90911755.8
(22) Anmeldetag: 11.07.1990
(51) Int. Cl.: B29C 65/02, B29C 65/18, B29B 17/00

(54) **VERFAHREN ZUR HERSTELLUNG EINES PLATTEN- ODER BAHNENFÖRMIGEN SCHICHTMATERIALS AUS THERMOPLASTISCHEM SCHAUMSTOFF**
PROCESS FOR PRODUCING PANELS OR WEBS OF LAMINATED CELLULAR THERMOPLASTIC MATERIAL
PROCEDE DE PRODUCTION DE PLAQUES OU DE DALLES STRATIFIEES EN UN MATERIAU ALVEOLAIRE THERMOPLASTIQUE

(30) Priorität: 13.07.1989 DE 3923054
(43) Veröffentlichungstag der Anmeldung: 29.04.1992
(73) Patentinhaber: HT TROPLAST AG, D-53839 Troisdorf (DE)
(72) Erfinder: BREITSCHEIDEL, Hans-Ulrich, D-5200 Siegburg (DE); LORRY, Cosmas, D-5216 Niederkassel (DE)
(86) Internationale Anmeldenummer: EP9001130
(87) Internationale Veröffentlichungsnummer: WO9100800

(56) Entgegenhaltungen:
- EP-A- 0 048 836
- DD-A- 96 523
- DE-A- 1 704 407
- FR-A- 895 069
- US-A- 3 746 610
- US-A- 4 082 824
- PATENT ABSTRACTS OF JAPAN, Band 8, Nr. 43 (M-279) (1480), 24. Februar 1984 & JP, A, 58199116 (FUJI KIKAI SEISAKUSHO K.K.) 19. November 1983

## Beschreibung

### Technisches Gebiet:

Die Erfindung betrifft ein Verfahren zur Herstellung eines platten- oder bahnenförmigen Schichtmaterials aus thermoplastischem Schaumstoff, insbesondere zum Einsatz als Drainageplatte oder -bahn.

### Stand der Technik:

Ein gattungsgemäßes Verfahren ist aus der DE-C2-30 37 011 (=US-A-4,417,932) bekannt. Nach diesem Verfahren werden aus Reststoff-Schnitzeln aus Polyethylenschaumstoff hoher Rohdichte mittels Strahlungswärme und nachfolgender Druckbehandlung Bahnen oder Platten hergestellt. Ein Nachteil bei dem bekannten Verfahren ist der hohe apparative Aufwand. Weiterhin eignet sich dieses Verfahren nur zur Verarbeitung von Schaumstoff-Schnitzeln einheitlicher Rohdichte. Insbesondere bei niedrigen Rohdichten (kleiner 80 kg/m³) ist eine hohe Störanfälligkeit zu beobachten.

Ähnliche Verfahren sind auch aus der GB-PS 1 578 045 und der US-A-3,746,610 bekannt.

### Aufgabe:

Aufgabe der vorliegenden Erfindung ist es daher, ein Verfahren zur Herstellung eines platten- oder bahnenförmigen Schichtmaterials aus thermoplastischem Schaumstoff, insbesondere zum Einsatz als Drainageplatte oder -bahn, zur Verfügung zu stellen, das mit geringem apparativem Aufwand die Verarbeitung von Schaumstoffmaterial unterschiedlicher Rohdichte ermöglicht.

### Darstellung der Erfindung:

Diese Aufgabe wird erfindungsgemäß dadurch gelöst, daß
- der thermoplastische Schaumstoff in Form von Streifen, Bahnen, Schnitzeln o. dgl. zu einer Schicht gleichmäßiger Höhe aufgeschüttet und
- bei einer Temperatur unterhalb der Erweichungstemperatur des Schaumstoffs verpreßt und verdichtet wird,
- daß die verpreßte und verdichtete Schicht aus thermoplastischem Schaumstoff mit Hilfe von Stiften, die auf eine Temperatur von mehr als 250 °C, bevorzugt bis 800 °C, erhitzt sind und die einen Außendurchmesser von 2 bis 15 mm aufweisen, in einem mittleren Abstand von 10 bis 50 mm und bei einer Verweilzeit der Stifte von 1 bis 10 s perforiert und verschweißt wird
- und daß die perforierte und verschweißte Schicht anschließend unter Aufrechterhaltung der Verpressung abgekühlt wird.

Wesentliches Merkmal der Erfindung ist es, daß die verdichteten Schaumstoffstreifen, -bahnen bzw. -schnitzel innerhalb kurzer Zeit mittels erhitzter Metallstifte o. dgl. miteinander verschweißt werden. Die hohe Maximal-Temperatur der Stifte, bevorzugt 600 bis 700 °C, bewirkt, daß das Schaumstoffmaterial nur kurze Zeit mit den Metallstiften in Berührung steht und anschließend indirekt, d.h. durch Wärmeleitung bzw. Wärmestrahlung, weiter erwärmt wird. Entsprechend weist die fertige Bahn bzw. Platte anschließend eine aus Kanälen bestehende Perforation auf, wobei die einzelnen Kanäle einen Durchmesser aufweisen, der etwa um 2 bis 4 mm größer ist als der Durchmesser der verwendeten Stifte.

Das erfindungsgemäße Verfahren kann sowohl diskontinuierlich als auch (quasi-)kontinuierlich erfolgen. Bei diskontinuierlicher Verfahrensweise werden beispielsweise Schaumstoffschnitzel aus chemisch oder physikalisch vernetztem Polyethylenschaumstoff, insbesondere Reststoff- oder Recyclingmaterial, in eine Form geschüttet, wobei die Schütthöhe bevorzugt 20 bis 200 mm beträgt. Bei Einsatz eines Schaumstoffmaterials mit hohem Raumgewicht wird dabei eine niedrige Schütthöhe bevorzugt und bei Schaumstoffmaterial mit niedrigerem Raumgewicht eine höhere Schütthöhe. Die Form wird anschließend mittels einer gelochten Abdeckung geschlossen und der Schaumstoff komprimiert. Durch die Löcher der Abdeckung werden anschließend von außen erhitzte bzw. von innen beheizbare Metallstifte gedrückt und nach einer Verweilzeit von 1 bis 10 s, bevorzugt 2 bis 4 s, wieder herausgezogen. Die erhitzten bzw. beheizbaren Metallstifte können dabei in einer oder mehreren Reihen angeordnet werden, ggf. können durch entsprechend hohe Anzahl an Metallstiften auch sämtliche Löcher bzw. Kanäle gleichzeitig hergestellt werden. Die Durchmesser der Löcher der Abdeckung sind zweckmäßig dem Außendurchmesser der erhitzten bzw. beheizbaren Metallstifte angepaßt.

Besonders wirtschaftlich kann das erfindungsgemäße Verfahren (quasi-)kontinuierlich durchgeführt werden, indem Schnitzel o. dgl. aus thermoplastischem Schaumstoff, bevorzugt aus chemisch oder physikalisch vernetztem Polyethylenschaum, zwischen zwei druckfesten Kettenbändern (Doppelbandpresse) verdichtet und einer Schweißstation zugeführt werden. Die druckfesten Kettenbänder sind dabei zweckmäßig gelocht und bewegen sich schrittweise. Während der Stillstandsphase erfolgt die Verschweißung durch reihen- oder gruppenweises Eindrücken von von außen erhitzten oder von innenbeheizten Metallstiften durch die Lochung der Bänder. In einer nachfolgenden Kühlstrecke bleibt der Preßdruck durch die Bänder erhalten. Zur Glättung der Oberfläche kann eine dünne Schaumstoff- oder Kunststoffbahn mit eingezogen werden. Ggf. kann die Oberfläche der Schnitzelbahn nach Verlassen der Kettenbänder mittels Heißluft erwärmt und mit kalten Walzen geglättet werden. Schließlich kann eine Randbesäumung vorgenommen werden, die zweckmäßig inline erfolgt.

Ein wesentlicher Vorteil des erfindungsgemäßen Verfahrens ist es, daß auch Fasermaterial enthaltendes Recycling-Schaumstoffmaterial eingesetzt werden kann. Weiterhin kann Schaumstoffmaterial unterschiedlicher Dichte, auch in Mischungen, eingesetzt werden.

### Kurze Beschreibung der Zeichnung:

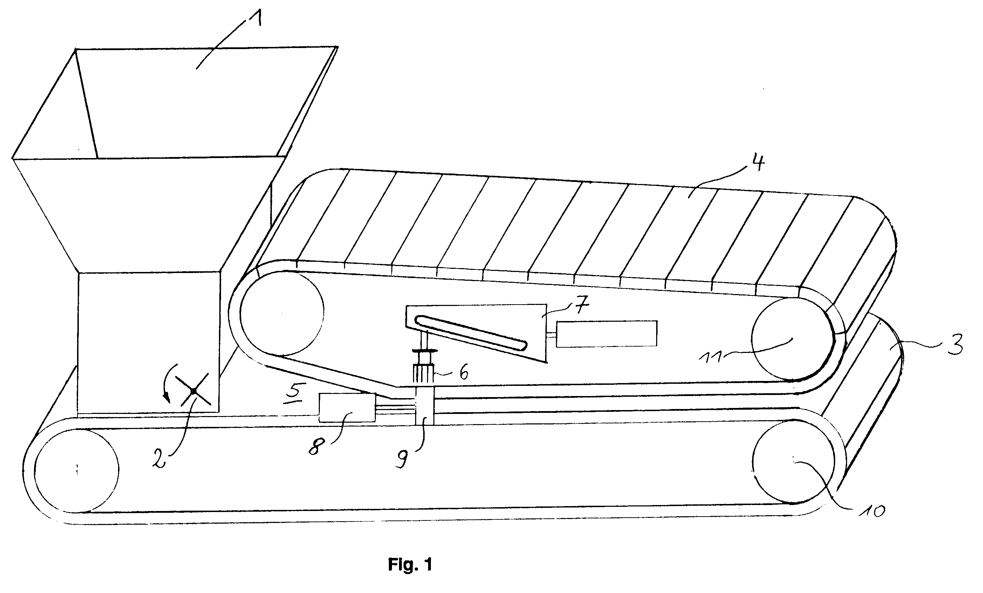

Das erfindungsgemäße Verfahren wird nachfolgend anhand der Zeichnung näher beschrieben. Es zeigt dabei
- Fig. 1: eine Prinzipskizze einer Anlage zur kontinuierlichen Herstellung einer Drainagebahn.

### Wege zur Ausführung der Erfindung:

### Beispiel 1

Zur (quasi-)kontinuierlichen Herstellung einer Drainagebahn einer Dicke von 20 mm werden über nicht dargestellte Fördereinrichtungen Schaumstoffschnitzel einer mittleren Abmessung von 25 mm und mit einer mittleren Rohdichte von 80 kg/m³ in den Dosiertrichter 1 gegeben. Die Dosierwalze 2 regelt über eine nicht dargestellte Regeleinrichtung die Fördermenge der Schaumstoffschnitzel.

Die Schaumstoffschnitzel werden anschließend mit dem unteren Kettenband 3 bei Raumtemperatur in den keilförmigen Spalt 5 zwischen dem unteren Kettenband 3 und dem oberen Kettenband 4 gefördert und zwischen den Kettenbändern 3, 4 elastisch auf eine Dicke von 18 mm komprimiert.

Im dargestellten Ausführungsbeispiel beträgt die Nutzbreite der Kettenbänder 500 mm. Die einzelnen plattenförmigen Kettenglieder weisen eine Breite von je 100 mm auf; entsprechend beträgt der schrittweise Vorschub der Kettenbänder ebenfalls 100 mm. Jedes plattenförmige Kettenglied weist in 5 Reihen jeweils 25 Löcher mit einem Durchmesser von 8 mm und einem gegenseitigen Mittenabstand von 20 mm (in der Fig. nicht dargestellt) auf.

Der schrittweise Vorschub der Kettenbänder 3, 4 erfolgt synchron durch die Vorschubeinrichtung 8, wobei eine exakt übereinstimmende Plazierung der Löcher der beiden Kettenbänder 3, 4 durch die Gleichlaufvorrichtung 9, z.B. in Form genau ausgerichteter Nocken an den Kettenbändern, erfolgt.

In jeder Stillstandsphase der Kettenbänder 3, 4 wird eine mit 5 x 25 Heizstiften 6 versehene Hubvorrichtung 7 betätigt, wobei die einzelnen Heizstifte mit einem Durchmesser von 4 mm und einer anfänglichen Oberflächentemperatur von 650° C durch das obere Kettenband 4, die in kaltem Zustand verdichtete Schaumstoffschnitzel-Schicht sowie das untere Kettenband 3 gedrückt wird. Die Verweilzeit der Stifte in der Schaumstoffschnitzel-Schicht beträgt 3 s. In dieser Zeit werden die Schaumstoffschnitzel durch Wärmeleitung und -strahlung teilweise angeschmolzen und miteinander verschweißt. Nach jedem "Schweißvorgang" werden die Metallstifte 6 aus den beiden Kettenbändern und der zwischenliegenden Schaumstoffschnitzel-Schicht herausgezogen, so daß der nächste schrittweise Vorschub der Kettenbänder um 100 mm erfolgen kann.

Der Druck der Kettenbänder 3, 4 in Höhe von ca. 1,5 bar bleibt bis zu den Ketten-Umlenkpunkten 10, 11 weitgehend konstant erhalten. Dadurch kann die Schaumstoffschnitzel-Schicht abkühlen und die mechanische Verdichtung fixiert werden. Außerdem erhalten die mittels Wärme entstandenen Verbindungen ihre mechanische Festigkeit durch Abkühlung vor dem Verlassen der Druckzone. Zur Randbegrenzung können übliche Begrenzungselemente zwischen den Kettenbändern mitlaufen (nicht dargestellt).

Nach dem Verlassen der Kühlstrecke wird die fertige Bahn mit einer Dicke von 20 mm und einem mittleren Raumgewicht von 140 kg/m³ in bekannter Weise mit Längs- und Querschneidevorrichtungen zu Rollen- oder Plattenware konfektioniert.

### Beispiel 2 bis 4

Es wird wie in Beispiel 1 verfahren, wobei lediglich die Zusammensetzung der Schaumstoffschnitzel wie folgt variiert wurde:

| **Beispiel** | mittlere Stückgröße der Schnitzel (mm) | Rohdichte der Schnitzel (kg/m³) | Rohdichte der Drainagebahn (kg/m³) |
|---|---|---|---|
| **2** | 30 × 30 × 10 | 30 | 120 |
| **3** | 30 × 30 × 7 | 140 | 187 |
| **4** | 30 × 30 × 4* | 125 (75%) | 196 |
| | 30 × 30 × 10 | 30 (25%) | |

| | | | |
|---|---|---|---|
| * mit Vlieskaschierung | | | |

Die fertigen Bahnen oder Platten weisen bei ausreichender Festigkeit und Elastizität entsprechend der Heizstift-Anordnung eine durchgehende Lochung für Drainagezwecke auf.

### Legende

- 1: Dosiertrichter
- 2: Dosierwalze
- 3: unteres Kettenband
- 4: oberes Kettenband
- 5: Spalt
- 6: Stifte
- 7: Hubvorrichtung
- 8: Vorschubeinrichtung
- 9: Gleichlaufvorrichtung
- 10: Ketten-Umlenkpunkt
- 11: Ketten-Umlenkpunkt

## Patentansprüche

1. Verfahren zur Herstellung eines platten- oder bahnenförmigen Schichtmaterials aus thermoplastischem Schaumstoff, insbesondere zum Einsatz als Drainageplatte oder -bahn, ***dadurch gekennzeichnet***, daß
- der thermoplastische Schaumstoff in Form von Streifen, Bahnen, Schnitzeln o. dgl. zu einer Schicht gleichmäßiger Höhe aufgeschüttet und
- bei einer Temperatur unterhalb der Erweichungstemperatur des Schaumstoffs verpreßt und verdichtet wird,
- daß die verpreßte und verdichtete Schicht aus thermoplastischem Schaumstoff mit Hilfe von Stiften, die auf eine Temperatur von mehr als 250 °C erhitzt sind und die einen Außendurchmesser von 2 bis 15 mm aufweisen, in einem mittleren Abstand von 10 bis 50 mm und bei einer Verweilzeit der Stifte von 1 bis 10 s perforiert und verschweißt wird
- und daß die perforierte und verschweißte Schicht anschließend unter Aufrechterhaltung der Verpressung abgekühlt wird.

2. Verfahren nach Anspruch 1, ***dadurch gekennzeichnet***, daß der thermoplastische Schaumstoff in Form von Schnitzeln einer mittleren Größe von 15 bis 30 mm und mit einer mittleren Rohdichte des Schaumstoffs von 30 bis 150 kg/m³ kontinuierlich zu einer Schicht von 20 bis 200 mm, bevorzugt 30 bis 150 mm Höhe aufgeschüttet wird.

3. Verfahren nach Anspruch 1 ***dadurch gekennzeichnet***, daß die Verpressung der aufgeschütteten Schaumstoffschicht kontinuierlich mittels einer Doppelbandpresse o. dgl. erfolgt, wobei die Bänder jeweils mit einer korrespondierenden Lochung zur Durchführung der erhitzten Stifte versehen sind.

4. Verfahren nach Anspruch 1 ***dadurch gekennzeichnet***, daß die Stifte einen Außendurchmesser von 3,5 bis 4,5 mm, eine Oberflächentemperatur von 600 bis 700 °C und einen mittleren Abstand von 15 bis 25 mm aufweisen.

## Claims

1. Method for the manufacture of a plate or web-shaped layer material from thermoplastic foam material, in particular for use as drainage tile or channel, **characterised in that**
- the thermoplastic foam material is deposited in the form of strips, webs or chips or the like to form a layer of uniform height and
- is pressed and compacted at a temperature below the softening temperature of the foam material, then
- in that the pressed and compacted layer of thermoplastic foam material is perforated and fused with the aid of rods at an average separation of 10 to 50 mm and with a residence time of the rods of 1 to 10 seconds, which rods are heated to a temperature of more than 250°C and which have an external diameter of 2 to 15 mm,
- and that the perforated and fused layer is then cooled while subject to maintenance of the pressing.

2. Method according to claim 1, **characterised in that** the thermoplastic foam material is continuously deposited in the form of chippings of an average size of 15 to 30 mm and with an average bulk density of foam material of 30 to 150 Kg/m³ to a layer depth of 20 to 200 mm, preferably 30 to 150 mm.

3. Method according to claim 1, **characterised in that** the pressing of the deposited foam layer takes place continuously by means of a double belt press or the like, with the belts being provided respectively with a corresponding perforation for through travel of the heated rods.

4. Method according to claim 1, **characterised in that** the rods have an external diameter of 3.5 to 4.5 mm, a surface temperature of 600 to 700°C and an average separation of 15 to 25 mm.

## Revendications

1. Procédé de fabrication d'un matériau en forme de plaque ou de bande en mousse de matière thermoplastique, en particulier pour utilisation comme plaque ou bande de drainage, **caractérisé** par le fait que
- la mousse de matière thermoplastique est versée sous forme de rubans, bandes, copeaux ou analogue en une couche de hauteur uniforme et
- est comprimée et densifiée à une température située en dessous de la température de ramollissement de la mousse,
- que la couche comprimée et densifiée de mousse de matière thermoplastique est perforée et soudée à l'aide de tiges chauffées à une température de plus de 250°C et présentant un diamètre extérieur de 2 à 15 mm, une distance réciproque moyenne de 10 à 50 mm, avec une durée de séjour des tiges de 1 à 10 s dans la couche, et
- que la couche perforée et soudée est ensuite refroidie avec maintien de la compression.

2. Procédé suivant la revendication 1, **caractérisé** par le fait que la mousse de matière thermoplastique est versée sous la forme de copeaux ayant une taille moyenne de 15 à 30 mm et une densité brute moyenne de la mousse de 30 à 150 kg/m³ de façon continue en une couche de 20 à 200 mm, de préférence de 30 à 150 mm de hauteur.

3. Procédé suivant la revendication 1, **caractérisé** par le fait que la compression de la couche de mousse versée s'effectue de façon continue à l'aide d'une presse à doubles bandes ou analogue, les bandes étant munies de perforations correspondantes pour le passage des tiges chauffées.

4. Procédé suivant la revendication 1, **caractérisé** par le fait que les tiges présentent un diamètre extérieur de 3,5 à 4,5 mm, une température superficielle de 600 à 700°C et une distance réciproque moyenne de 15 à 25 mm.
